# EUROPÄISCHE PATENTANMELDUNG

(11) **EP 3 179 615 A1**
(43) Veröffentlichungstag der Anmeldung: **14.06.2017**
(21) Anmeldenummer: 15199587.5
(22) Anmeldetag: 11.12.2015
(51) Int. Cl.: H02K 21/22, H02K 1/27, H02K 7/18

(54) **PERMANENTMAGNET FÜR EINEN ROTOR EINER AUSSENLÄUFERMASCHINE**

(71) Anmelder: Siemens Aktiengesellschaft, 80333 München (DE)
(72) Erfinder: Bott, Erich, 97618 Hollstadt (DE); Seufert, Reiner, 97616 Salz (DE); Vollmer, Rolf, 36129 Gersfeld (DE)

(57) **Zusammenfassung**

Die Erfindung betrifft einen Permanentmagneten (10, 110, 210, 310, 410, 1010) zur Verbindung mit einer Verbindungsvorrichtung (672, 772, 872, 972) einer Außenläufermaschine (61, 62, 63, 64, 65, 66, 67, 68), umfassend einen Nord- (21, 121) und einen Südpol (22, 122) als magnetische Pole, wobei in einem Querschnitt (13) des Permanentmagneten (10, 110, 210, 310, 410, 1010) eine Magnetisierung (14, 114) von dem Südpol (22, 122) zu dem Nordpol (21, 121) verläuft, wobei der Querschnitt (13) eine Hüllkurve (15, 1015, 215) mit einem konkaven Abschnitt (16, 116, 1016, 216) aufweist, wobei die Hüllkurve (15, 1015, 215) sichelförmig den konkaven Abschnitt (16, 116, 1016, 216) und einen konvexen Abschnitt (17, 117, 217, 317) aufweist, wobei der Permanentmagnet (10, 110, 210, 310, 410, 1010) entlang des konvexen Abschnitts (17, 117, 217, 317) bogenförmig verläuft, wobei die magnetischen Pole bogenförmig entlang des konkaven Abschnitts (16, 116, 1016, 216) verlaufen, einen Rotor (600, 700, 800, 900) für eine Außenläufermaschine (61, 62, 63, 64, 65, 66, 67, 68) umfassend mindestens einen Permanentmagneten (10, 110, 210, 310, 410, 1010), die Außenläufermaschine (61, 62, 63, 64, 65, 66, 67, 68) umfassend den Rotor (600, 700, 800, 900), ein Fahrzeugrad (646, 746, 846) umfassend den Rotor (600, 700, 800,900), sowie eine Windkraftanlage(690, 695, 790, 795, 890, 895, 990, 995) umfassend den Rotor (600, 700, 800, 900).

## Beschreibung

Die Erfindung betrifft einen Permanentmagneten zur Verbindung mit einer Verbindungsvorrichtung einer Außenläufermaschine, umfassend
- einen Nord- und einen Südpol als magnetische Pole,
- wobei in einem Querschnitt des Permanentmagneten eine Magnetisierung von dem Südpol zu dem Nordpol verläuft.

Die Erfindung betrifft auch einen Rotor für eine Außenläufermaschine umfassend mindestens einen derartigen Permanentmagneten, sowie eine Außenläufermaschine, umfassend den Rotor, ein Fahrzeugrad, umfassend den Rotor, und eine Windkraftanlage, umfassend den Rotor.

Derartige Permanentmagnete sind aus der EP 1276212 A2 bekannt. Die Permanentmagneten werden im Zusammenhang mit elektrischen Synchronmaschinen, insbesondere auch Außenläufermotoren oder Außenläufermaschinen, beschrieben, wobei diese durch Permanentmagnete erregt werden. Der Wirkungsgrad dieser Maschinen liegt höher als der von elektrisch erregten Synchronmaschinen. Permanentmagnete mit hoher Energiedichte, d.h. großes Produkt aus Flussdichte und Feldstärke, erweisen sich dabei den weniger energiestarken Magneten überlegen. Es ist bekannt, dass Permanentmagnete nicht nur in der Form der direkten Zuordnung zum Nutspalt, d.h. in einer flachen Anordnung, sondern auch in einer Art Sammlerkonfiguration (Flusskonzentration) zur Anwendung kommen. Direkte Zuordnung zum Nutspalt bedeutet, dass die Flussdichte des Magneten etwa gleich jener des Nutspalts ist. Dies gilt zumindest so lange wie der Nutspalt im Verhältnis zur Magnethöhe klein ist. Die Flusskonzentrations-Anordnung lässt im Nutspalt größere Flussdichten als im Magneten zu. Dies wird durch eine großflächige Magnetanordnung erreicht. Die Querschnittsfläche des Magneten ist größer als die Polfläche im Nutspalt. Dementsprechend ist die Flussdichte im Magneten geringer als die im Polbereich. In der EP 1276212 A2 wird zur erhöhten Drehmomentausnutzung bei einer Synchronmaschine gegenüber vergleichbaren Synchronmaschinen vorgeschlagen, gegebenenfalls zusätzlich zu der angegebenen Bedingung für das Teilungsverhältnis der mittleren Spulenweite und der Polteilungsweite die Permanentmagnete des Rotors in Flusskonzentration anzuordnen. Damit wird die Nutspaltinduktion auf deutlich über ein Tesla angehoben, ohne dass das Statoreisen in Sättigung gerät. Damit sind Luftspaltinduktionen erreichbar, die etwa dem Doppelten der bekannten elektrischen Synchronmaschinen entsprechen. In der EP 1276212 A2 tritt damit eine Steigerung des thermischen Drehmoments gegenüber herkömmlichen Synchronmaschinen ein, wobei unter "thermischem Drehmoment" das bei einer vorgegebenen Temperatur maximal abzugebende Dauerdrehmoment zu verstehen ist. Es wird somit eine Steigerung des Wirkungsgrads herbeigeführt, ebenso wie eine Steigerung des maximalen Drehmoments. Die Ausnutzung der Maschine (Nm/kg) wird etwa um den Faktor 2 gegenüber herkömmlichen Synchronmaschinen gesteigert. Es stellt sich außerdem aufgrund der geringen Masse eine Steigerung des Beschleunigungsvermögens ein.

Der Erfindung liegt die Aufgabe zugrunde, einen technischen Beitrag zum Stand der Technik zu leisten, mit dem kostengünstig in einer hohen Qualität ein Permanentmagnet für eine Außenläufermaschine mit einem hohen Wirkungsgrad verwendet werden kann.

Die Aufgabe wird durch einen Permanentmagneten mit den Merkmalen des Anspruchs 1 gelöst. Ein erfindungsgemäßer Permanentmagnet zur Verbindung mit einer Verbindungsvorrichtung einer Außenläufermaschine umfasst
- einen Nord- und einen Südpol als magnetische Pole,
- wobei in einem Querschnitt des Permanentmagneten eine Magnetisierung von dem Südpol zu dem Nordpol verläuft,
- wobei der Querschnitt eine Hüllkurve mit einem konkaven Abschnitt aufweist,
- wobei die Hüllkurve sichelförmig den konkaven Abschnitt und einen konvexen Abschnitt aufweist,
- wobei der Permanentmagnet entlang des konvexen Abschnitts bogenförmig verläuft,
- wobei die magnetischen Pole bogenförmig entlang des konkaven Abschnitts verlaufen.

Die Aufgabe wird auch durch einen Rotor mit den Merkmalen des Anspruchs 9 gelöst. Ein erfindungsgemäßer Rotor für eine Außenläufermaschine umfasst mindestens einen erfindungsgemäßen Permanentmagneten, wobei der Rotor die Verbindungsvorrichtung für die Verbindung mit dem Permanentmagneten aufweist, wobei der Permanentmagnet sich von seinem ersten Ende zu seinem zweiten Ende parallel zu einer Drehachse erstreckt, wobei der konkave Abschnitt des Permanentmagneten entlang einer Berandung des Rotors angeordnet ist.

Die Aufgabe wird auch durch eine Außenläufermaschine mit den Merkmalen des Anspruchs 13 gelöst. Eine erfindungsgemäße Außenläufermaschine umfasst einen erfindungsgemäßen Rotor und einen Stator, der in einem Betrieb der Außenläufermaschine über einen Luftspalt mit dem Rotor magnetisch zusammenwirkt, wobei der Rotor um die Drehachse drehbar gelagert ist.

Die Aufgabe wird auch durch ein Fahrzeugrad nach Anspruch 14 gelöst. Ein erfindungsgemäßes Fahrzeugrad umfasst einen erfindungsgemäßen Rotor, wobei das Fahrzeugrad eine Felge aufweist, die den Rotor umfasst.

Die Aufgabe wird auch durch eine Windkraftanlage mit den Merkmalen nach Anspruch 15 gelöst. Eine erfindungsgemäße Windkraftanlage umfasst einen erfindungsgemäßen Rotor, wobei die Windkraftanlage Flügel umfasst, die mit dem Rotor verbunden sind.

Die Aufgabe wird erfindungsgemäß vorteilhaft gelöst, indem in einem Betrieb einer Außenläufermaschine mit mindestens einem erfindungsgemäßen Permanentmagneten durch dessen erfindungsgemäßen Querschnitt ein magnetischer Fluss im Rotor vorteilhaft kostengünstig in einer hohen Qualität von einem Südpol zu dem Nordpol ein und desselben Permanentmagneten durch den Rotor geführt werden kann. So kann mit einem erfindungsgemäßen Permanentmagneten vorteilhaft kostengünstig in einer hohen Qualität in einem Betrieb eines Außenläufermotors ein hoher Wirkungsgrad vorteilhaft erreicht werden. Vorteilhaft kostengünstig in einer hohen Qualität kann durch den erfindungsgemäßen Querschnitt und die vom Süd- zum Nordpol verlaufende Magnetisierung eine laterale Magnetisierung mit vorteilhaft geringer Menge an Magnetmaterial vorteilhaft erreicht werden.

Der Permanentmagnet erstreckt sich von seinem ersten Ende in einer ersten Richtung bis zu seinem zweiten Ende. Der Querschnitt des Permanentmagneten erstreckt sich in einer Ebene, die durch eine zweite Richtung eine dritte Richtung aufgespannt ist. Die zweite und die dritte Richtung verlaufen senkrecht zu der ersten Richtung.

Ein erfindungsgemäßer Rotor weist den weiteren Vorteil auf, dass der Rotor vorteilhaft kostengünstig in einer hohen Qualität keine ferromagnetischen Materialien zum Führen des magnetischen Flusses von oder zu einem magnetischen Pol eines Permanentmagneten in einem Betrieb der Außenläufermaschine mit dem Rotor benötigt. So kann vorteilhaft kostengünstig in einer hohen Qualität durch Verwendung von Materialien geringer Massedichte und/oder geringeren Massevolumens ein erfindungsgemäßer Rotor für eine Außenläufermaschine mit einem hohen Wirkungsgrad vorteilhaft erreicht werden. Zum Beispiel benötigt der Rotor so vorteilhaft kein Blechpaket aus Elektroblechen zum Führen des magnetischen Flusses von oder zu einem magnetischen Pol eines Permanentmagneten in einem Betrieb der Außenläufermaschine.

Das Massevolumen einer Vorrichtung bzw. Erzeugnisses ist das aus Material bestehende, raumverdrängende Volumen der Vorrichtung bzw. des Erzeugnisses, also das Volumen der greifbaren Materialität. Ein Vollzylinder besteht z.B. ausschließlich aus Massevolumen. Bei einem Hohlzylinder umfasst das Massevolumen nicht den Anteil des Volumens des Hohlraums des Hohlzylinders.

Die Hüllkurve des Rotors ist der in einem Querschnitt senkrecht zu der Drehachse betrachtete äußere Rand des Rotors. Die Berandung des Rotors verläuft in diesem Querschnitt innerhalb des äußeren Rands.

Es kann ein erfindungsgemäßer Rotor eine Leichtbaukonstruktion aufweisen, die mindestens einen erfindungsgemäßen Permanentmagneten und mindestens ein Leichtbaumaterial aufweist, wobei das mindestens eine Leichtbaumaterial eine geringere Massedichte besitzt als ein Elektroblech, insbesondere kleiner als 4,6 kg/dm³, wobei der mindestens eine Permanentmagnet und das mindestens eine Leichtbaumaterial mehr als 90% des Massevolumens zwischen der Berandung und einer Hüllkurve des Rotors ausfüllen. So kann vorteilhaft kostengünstig in einer hohen Qualität durch eine geringere Massedichte ein hoher Wirkungsgrad erreicht werden. Die Massedichte von Elektroblechen beträgt ca. 7,6 kg/dm³. Als Leichtbaumaterial können z.B. vorteilhaft Aluminium, Magnesium oder Verbundwerkstoffe eingesetzt werden. Durch Verbundwerkstoffe, z.B. CFK-Verbundwerkstoffe, können vorteilhaft hohe Kräfte aufgenommen werden und es kann dennoch eine geringe Materialdichte vorteilhaft vorhanden sein.

Ein erfindungsgemäßer Rotor kann mindestens zwei erfindungsgemäße Permanentmagnete aufweisen, die sich von ihrem ersten zu ihrem zweiten Ende parallel zu einer Drehachse erstrecken, wobei die konkaven Abschnitte der Permanentmagnete an der Berandung des Rotors auf einer zur Drehachse konzentrisch verlaufenden Kreislinie angeordnet sind. So kann eine gleichmäßigere Drehbewegung des Rotors um die Drehachse vorteilhaft erreicht werden.

Ein Nordpol eines Permanentmagneten kann entlang der Berandung des Rotors neben dem Nordpol des an der Berandung des Rotors nächstgelegenen Permanentmagneten vorhanden sein. So kann vorteilhaft kostengünstig in einer hohen Qualität ein magnetischer Pol eines erfindungsgemäßen Rotors die beiden Nordpole aufweisen. Vorteilhaft kann hierbei der Abstand zwischen dem Permanentmagneten und seinem nächstgelegenen Permanentmagneten nicht den Abstand des Nordpols und des Südpols von ein und demselben Permanentmagneten entsprechen.

Eine erfindungsgemäße Außenläufermaschine weist den weiteren Vorteil auf, dass eine elektrische Maschine vorteilhaft kostengünstig in einer hohen Qualität mit einem hohen Wirkungsgrad als Außenläufermaschine zur Verfügung gestellt werden kann. Vorteilhaft kann das Trägheitsmoment des Rotors durch den Einsatz mindestens eines erfindungsgemäßen Permanentmagneten vorteilhaft kostengünstig in einer hohen Qualität reduziert werden. Es kann hierzu auch vorteilhaft durch eine geringere Masse und/oder Abmessung des Rotors ein geringeres Trägheitsmoment vorteilhaft erreicht werden. Vorteilhaft kann dadurch auch eine Steigerung des Beschleunigungsvermögens erfolgen. Weiterhin vorteilhaft kann durch den erfindungsgemäßen Querschnitt eines erfindungsgemäßen Permanentmagneten eine Außenläufermaschine vorteilhaft kostengünstig in einer hohen Qualität mit vorteilhaft kleiner Abmessung zur Verfügung gestellt werden.

Es kann die Verbindungsvorrichtung einen Kunststoff aufweisen. Vorteilhaft weisen Kunststoffe, insbesondere auch bei einer hohen Anforderung an die Qualität, einen niedrigen Preis auf. Es kann mit vorteilhaft kostengünstigen Verfahren die Verbindungsvorrichtung mit dem Kunststoff und mindestens einem erfindungsgemäßen Permanentmagneten hergestellt werden.

Die Verbindungsvorrichtung kann eine Befestigungseinrichtung aufweisen, die mit der Verbindungsvorrichtung, insbesondere einstückig, verbunden ist und sich von einem ersten axialen Ende des Rotors bis zu einer Welle oder einer ersten Lagervorrichtung der Außenläufermaschine an einer Achse der Außenläufermaschine erstreckt.

Ein erfindungsgemäßer Rotor kann bei einer erfindungsgemäßen Außenläufermaschine an der Welle befestigt mit Hilfe einer ersten und einer zweiten Lagervorrichtung relativ zu einem Stator der Außenläufermaschine um die Drehachse drehbar gelagert sein. Alternativ dazu kann ein erfindungsgemäßer Rotor bei einer erfindungsgemäßen Außenläufermaschine mit Hilfe der ersten und einer zweiten Lagervorrichtung an der Achse relativ zu einem Stator der Außenläufermaschine um die Drehachse drehbar gelagert sein.

In einem Betrieb einer erfindungsgemäßen Außenläufermaschine mit einem erfindungsgemäßen Rotor als Generator wird der Rotor durch mechanische Energie in eine Drehung um die Drehachse versetzt. Durch das magnetische Zusammenwirken zwischen magnetischen Polen des Rotors und des Stator über einen Luftspalt kann die mechanische Energie in elektrische Energie umgewandelt werden. Die elektrische Energie kann an mindestens einer Wicklung, die am Stator befestigt ist und zu einer Bildung der magnetischen Pole des Stators beiträgt, durch Anschließen eines elektrischen Verbrauchers entnommen werden.

Bei einem Betrieb einer erfindungsgemäßen Außenläufermaschine mit einem erfindungsgemäßen Rotor als Motor wird über die mindestens eine Wicklung elektrische Energie zugeführt und durch das magnetische Zusammenwirken zwischen den magnetischen Polen des Stators und eines erfindungsgemäßen Rotors über den Luftspalt elektrische Energie in mechanische Energie umgewandelt. Dabei wird ein Drehmoment erzeugt, dass den Rotor in Drehung um die Drehachse versetzen kann und es kann über den Rotor mechanische Energie an einen mechanischen Verbraucher in Form einer Drehbewegung abgegeben werden. Hierzu kann der mechanische Verbraucher über eine drehfeste Verbindung mit dem Rotor verbunden sein.

Ein erfindungsgemäßes Fahrzeugrad weist den weiteren Vorteil auf, dass die Felge vorteilhaft kostengünstig in einer hohen Qualität den Rotor einer Außenläufermaschine mit einem hohen Wirkungsgrad umfassen kann, wobei die Außenläufermaschine einem an der Fahrzeugachse eines Fahrzeugs befestigten Stator und das Fahrzeugrad umfasst. So kann vorteilhaft kostengünstig in einer hohen Qualität durch Verwendung von Materialien geringer Massedichte und/oder geringen Massevolumens ein erfindungsgemäßes Fahrzeugrad für einen Fahrzeugantrieb mit einem hohen Wirkungsgrad vorteilhaft erreicht werden. Außerdem kann das Fahrzeugrad vorteilhaft kostengünstig in einer hohen Qualität den Rotor als Teil einer Außenläufermaschine umfassen, indem vorteilhaft der Rotor dasselbe Material wie die Felge aufweisen kann. Ein Fahrzeugantrieb eines Fahrzeugs kann die Außenläufermaschine umfassen.

Es kann die Felge ein erfindungsgemäßer Rotor sein, der die Leichtbaukonstruktion aufweist. So kann der mindestens eine erfindungsgemäße Permanentmagnet und das mindestens eine Leichtbaumaterial mehr als 90% des Massevolumens zwischen der Berandung des Rotors und der Hüllkurve der Felge ausfüllen. Es kann so ein erfindungsgemäßes Fahrzeugrad vorteilhaft kostengünstig in einer hohen Qualität für einen Fahrzeugantrieb mit hohem Wirkungsgrad verwendet werden. Die Hüllkurve der Felge ist der in einem Querschnitt senkrecht zu der Drehachse betrachtete äußere Rand der Felge.

Eine erfindungsgemäße Windkraftanlage weist den weiteren Vorteil auf, dass das Material des Rotors vorteilhaft kostengünstig für eine hohe Qualität einer Verbindung mit den Flügeln vorteilhaft unabhängig von Materialanforderungen zur Führung des magnetischen Flusses in der Außenläufermaschine gewählt werden kann, die einen an der Windkraftanlage befestigten Stator und einen erfindungsgemäßen Rotor umfasst.

Weiterhin vorteilhaft kann die Windkraftanlage einen erfindungsgemäßen Rotor aufweisen, der die Leichtbaukonstruktion aufweist. So kann vorteilhaft kostengünstig durch das reduzierte Gewicht des Rotors der Rotor einer Außenläufermaschine an einem Ende des Mastes der Windkraftanlage in einer hohen Qualität mit einem hohen Wirkungsgrad montiert sein. Die Leichtbaukonstruktion des Rotors kann hierfür vorteilhaft die Flügel umfassen oder eine Nabe der Windkraftanlage umfassen, wobei die Nabe mit den Flügeln verbunden ist.

Es können die Flügel vorteilhaft kostengünstig in einer hohen Qualität einstückig mit dem Rotor verbunden sein bzw. aufgrund der ähnlichen Materialien der Leichtbaukonstruktion des Rotors und der Flügel vorteilhaft kostengünstig in einer hohen Qualität mit dem Rotor durch Befestigungselemente verbunden sein. Eine einstückige Verbindung kann z.B. durch die Herstellung der Flügel und des Rotors als eine Einheit überwiegend aus Faserverbundwerkstoffen erfolgen oder durch Ankleben der Flügel an den Rotor erfolgen. Ein Ankleben kann vorteilhaft kostengünstig in einer hohen Qualität erfolgen, da die ähnlichen Materialien dieselben Anforderungen an den Klebstoff für eine qualitativ hochwertige Verbindung stellen. Bei einer Verbindung der Flügel an dem Rotor durch Befestigungselemente können vorteilhaft kostengünstig in einer hohen Qualität die vergleichbaren Materialeigenschaften des Rotors und der Flügel zu einer geringeren inhomogenen Belastung der Verbindung führen.

Vorteilhafte Ausgestaltungen der Erfindung sind in den abhängigen Ansprüchen angegeben. Es wird hierbei vorteilhaft ein technischer Beitrag zur vorteilhaften Ausgestaltung eines erfindungsgemäßen Permanentmagneten, eines erfindungsgemäßen Rotors, einer erfindungsgemäßen Außenläufermaschine, eines erfindungsgemäßen Fahrzeugrads und/oder einer erfindungsgemäßen Windkraftanlage geleistet, mit dem kostengünstig in einer hohen Qualität ein Permanentmagnet für eine Außenläufermaschine mit einem hohen Wirkungsgrad verwendet werden kann.

So ist eine Ausgestaltung eines erfindungsgemäßen Permanentmagneten vorteilhaft, bei der der konkave Abschnitt der Hüllkurve ein Kreisbogen mit einem Radius Rᵢ ist und der konvexe Abschnitt der Hüllkurve ein Kreisbogen mit einem Radius Rₐ ist, wobei der Radius Rᵢ größer ist als der Radius Rₐ. Die erfindungsgemäßen Permanentmagnete können so vorteilhaft eine geringe Höhe aufweisen, wobei die Höhe als größter Abstand zwischen dem konkaven Abschnitt und dem konvexen Abstand gemessen wird.

Es kann so ein erfindungsgemäßer Rotor hochpolig ausgeführt sein, wobei der Rotor mindesten zehn magnetische Pole, insbesondere mindestens 24 Pole, um die Drehachse entlang der Berandung des Rotors angeordnet aufweist. Durch den großen Radius Rᵢ und den kleinen Radius Rₐ kann der Rotor vorteilhaft mit einer geringen Erstreckung zwischen der Berandung des Rotors und seiner Hüllkurve zur Verfügung gestellt werden. So kann ein erfindungsgemäßer Rotor vorteilhaft durch ein geringes Trägheitsmoment einen hohen Wirkungsgrad aufweisen.

Es kann ein erfindungsgemäßer Rotor mindestens 100 magnetische Pole bei einem Durchmesser des Rotors von mindestens 1 m aufweisen. Vorteilhaft kann so ein erfindungsgemäßer Rotor mit einem Durchmesser von mindestens 1 m mit erfindungsgemäßen Permanentmagneten hochpolig zur Verfügung gestellt werden, insbesondere vorteilhaft für eine Windkraftanlage. Es kann vorteilhaft die Verbindungsvorrichtung mehrere Segmente um die Drehachse angeordnet aufweisen, wobei mindestens ein erfindungsgemäßer Permanentmagnet mit einem Segment verbunden ist. So kann ein erfindungsgemäßer Rotor, insbesondere mit einem Durchmesser von mindestens 1 m, vorteilhaft bei einer Montage des Rotors aus Segmenten zusammengesetzt werden oder einzelne Segmente vorteilhaft ausgetauscht werden. Hierbei ist vorteilhaft kein Blechpaket aus Elektroblechen zum Führen des magnetischen Flusses von oder zu einem magnetischen Pol innerhalb eines Segments oder zwischen zwei Segmenten eines erfindungsgemäßen Permanentmagneten in einem Betrieb der Außenläufermaschine notwendig.

In einer weiteren vorteilhaften Ausgestaltung eines erfindungsgemäßen Permanentmagneten weist der Permanentmagnet eine in einer ersten Richtung senkrecht zu dem Querschnitt verlaufende axiale Kontur, insbesondere eine Ausnehmung oder einen hervorstehenden Steg, auf, welche eine Fläche für die Verbindung der Verbindungsvorrichtung mit dem Permanentmagneten durch Formschluss aufweist. Vorteilhaft kann so entlang der Drehachse des Rotors eine gleichmäßige Verteilung der Kräfte zwischen einem erfindungsgemäßen Permanentmagneten und der Verbindungsvorrichtung erfolgen. Insbesondere kann sich hierfür vorteilhaft die axiale Kontur von dem ersten Ende des Permanentmagneten zu dem zweiten Ende des Permanentmagneten erstrecken.

In einer weiteren vorteilhaften Ausgestaltung eines erfindungsgemäßen Permanentmagneten weist der Permanentmagnet eine Endfläche an einem ersten Ende des Permanentmagneten auf, wobei die Endfläche des ersten Endes eine Kontur, insbesondere eine Ausnehmung oder einen gegenüber der Endfläche hervorstehenden Steg, aufweist, welche innerhalb der Hüllkurve für die Verbindung der Verbindungsvorrichtung mit dem Permanentmagneten durch Formschluss aufweist. Die Fläche kann vorteilhaft hergestellt und in einer Außenläufermaschine verwendet werden, da die Fläche vorteilhaft keinen über die Hüllkurve hinausragenden Bereich des Permanentmagneten erfordert. Es kann durch die sichelförmige Hüllkurve und den vorteilhaften bogenförmigen Verlauf der Magnetisierung eine vorteilhaft große Fläche für die Verbindung mit einer Außenläufermaschine mit hohem Wirkungsgrad vorteilhaft platzsparend zur Verfügung gestellt werden.

Bei einem erfindungsgemäßen Permanentmagnet kann die Kontur eine Ausnehmung in der Endfläche des ersten Endes aufweisen. Aufgrund der vorteilhaft großen Fläche kann trotz der Ausnehmung noch eine vorteilhafte Berandung der Ausnehmung erreicht werden und Materialausbrüche an den Permanentmagneten vorteilhaft vermieden werden.

Die Kontur kann eine Nut aufweisen. So können vorteilhaft parallel zum Querschnitt auf dem Permanentmagnet wirkende Kraftkomponenten vorteilhaft auf die Fläche verteilt entsprechend dem Verlauf der Nut vorteilhaft aufgenommen werden.

Bei einem erfindungsgemäßen Permanentmagneten kann die Kontur einen gegenüber der Endfläche hervorstehenden Steg aufweisen. Es kann so zum Verbinden mit der Verbindungsvorrichtung der Steg vorteilhaft einfach eingegossen werden.

In einer weiteren vorteilhaften Ausgestaltung eines erfindungsgemäßen Permanentmagneten weist die Kontur eine kreisrunde Berandung auf. Vorteilhaft kann durch die kreisförmige Berandung die Fläche groß ausgeführt werden.

In einer weiteren vorteilhaften Ausgestaltung eines erfindungsgemäßen Permanentmagneten weist die Kontur eine Berandung auf, die sich bogenförmig von einem ersten Punkt des konvexen Abschnitts zu einem zweiten Punkt des konvexen Abschnitts erstreckt. Es kann so vorteilhaft eine parallel zu dem Querschnitt auf dem Permanentmagneten relativ zu der Verbindungsvorrichtung wirkende Kraftkomponente durch die Berandung der Kontur aufgenommen werden. Insbesondere ist dies bei einem erfindungsgemäßen Rotor vorteilhaft, bei dem Kräfte in radialer Richtung wirken.

Es kann die Verbindungsvorrichtung ein Verbindungsteil aufweisen, das einen umlaufenden Rand für eine formschlüssige Verbindung mit der Berandung der Kontur aufweist. Die Verbindung der Verbindungsvorrichtung mit dem Permanentmagneten durch Formschluss kann so diese formschlüssige Verbindung aufweisen. So können vorteilhaft, insbesondere bei einem erfindungsgemäßen Rotor, durch den umlaufenden Rand hohe Kräfte von der Berandung aufgenommen werden, da der umlaufende Rand keinen Anfang und keine Ende aufweist und so beim Einwirken der Kräfte auf dem Rand diese auf dem gesamten umlaufende Rand verteilt werden.

In einer weiteren vorteilhaften Ausgestaltung eines erfindungsgemäßen Permanentmagneten weist der Permanentmagnet zwischen dem Nord- und dem Südpol an dem konkaven Abschnitt eine Ausnehmung auf. So kann vorteilhaft bei einer erfindungsgemäßen Außenläufermaschine die dem Luftspalt zugewandte Oberfläche des Rotors eine Ausnehmung zwischen dem Nord- und dem Südpol des Permanentmagneten aufweisen.

In einer weiteren vorteilhaften Ausgestaltung eines erfindungsgemäßen Permanentmagneten verläuft der Permanentmagnet zwischen dem Nord- und dem Südpol entlang dem konkaven Abschnitt. So kann bei einer erfindungsgemäßen Maschine vorteilhaft die dem Luftspalt zugewandte Oberfläche des Rotors zwischen dem Nord- und dem Südpol des Permanentmagneten eine durchgehende Oberfläche aufweisen.

In einer weiteren vorteilhaften Ausgestaltung eines erfindungsgemäßen Permanentmagneten ist der Permanentmagnet ein gesinterter Permanentmagnet. Es kann vorteilhaft ein erfindungsgemäßer Permanentmagnet mit hoher Magnetkraft als Bestandteil eines erfindungsgemäßen Rotors oder einer erfindungsgemäßen Außenläufermaschine verwendet werden. Es kann eine hohe Luftspaltinduktion platzsparend durch eine hohe Magnetkraft vorteilhaft erreicht werden.

In einer weiteren vorteilhaften Ausgestaltung eines erfindungsgemäßen Rotors umfasst ein aus einem Werkstoff einstückig hergestelltes Teil des Rotors eine kräfteübertragende Vorrichtung und das Teil umfasst mehr als 90% des Massevolumens der Verbindungsvorrichtung. So kann vorteilhaft für eine bestimmte Anwendung des Rotors die kräfteübertragende Vorrichtung als ein Bestandteil eines erfindungsgemäßen Rotors hergestellt werden. Neben der vorteilhaft kostengünstigen Herstellung kann die Kräfteübertragung zwischen dem Rotor und dem Anwendungserzeugnisses vorteilhaft in hoher Qualität und vorteilhaft kostengünstig, z.B. platzsparend und/oder materialsparend mit hohem Wirkungsgrad erfolgen. Die Kräfteübertragende Vorrichtung kann z.B. eine Riemenscheibe für einen Riemenantrieb sein, eine Felge eines Fahrzeugrads oder eine Nabe einer Windkraftanlage.

In einer weiteren vorteilhaften Ausgestaltung eines erfindungsgemäßen Rotors weist der Rotor die Verbindung mit der Endfläche an dem ersten Ende des Permanentmagneten an einem ersten axialen Ende des Rotors auf und der Rotor weist eine zweite Verbindung der Verbindungsvorrichtung mit einer Endfläche an dem zweiten Ende des Permanentmagneten auf. So können die Permanentmagnete durch eine Verbindung mit ihren beiden Endflächen mit dem Rotor vorteilhaft verbunden und damit vorteilhaft befestigt, werden, insbesondere vorteilhaft innerhalb der Berandung des Rotors.

In einer weiteren vorteilhaften Ausgestaltung eines erfindungsgemäßen Rotors weist der Rotor eine zweite Verbindung in einem Rotorabschnitt zwischen dem ersten und einem zweiten axialen Ende des Rotors auf und der Rotor weist zwischen dem Rotorabschnitt und dem zweiten axialen Ende mindestens einen weiteren Permanentmagneten auf. Es können so vorteilhaft mehrere Permanentmagnete in axialer Richtung hintereinander an dem Rotor befestigt werden.

In einer weiteren vorteilhaften Ausgestaltung eines erfindungsgemäßen Rotors erstreckt sich die Verbindungsvorrichtung in einem Querschnitt des Rotors an den Permanentmagneten angrenzend konzentrisch zur Berandung des Rotors ringförmig. Es kann so eine vorteilhaft gleichmäßige Verteilung der auf den Permanentmagneten wirkende Kräfte auf die Verbindungsvorrichtung vorteilhaft erreicht werden und gleichzeitig vorteilhaft bei mehreren Permanentmagneten in axialer Richtung hintereinander geringe, im Idealfall keine, Unterbrechung der Oberfläche zwischen hintereinander angeordneten Permanentmagneten erreicht werden.

In einer weiteren vorteilhaften Ausgestaltung eines erfindungsgemäßen Rotors ist der Permanentmagnet in der Verbindungvorrichtung eingebettet. So können vorteilhaft die Anforderungen an die Maßhaltigkeit des Permanentmagneten in seinen Abmessungen vorteilhaft gering sein, da die Verbindungsvorrichtung die Lücken, die durch eine fehlende Maßhaltigkeit des Permanentmagneten entstehen, ausfüllt. So kann z.B. auf eine mechanische Nachbearbeitung eines Permanentmagneten nach dem Sintern vorteilhaft verzichtet werden.

In einer weiteren vorteilhaften Ausgestaltung eines erfindungsgemäßen Rotors ist der mindestens eine erfindungsgemäße Permanentmagnet zumindest stoffschlüssig mit der Verbindungsvorrichtung verbunden. Hierzu weist ein erfindungsgemäßer Permanentmagnet die Fläche zumindest für die Verbindung der Verbindungsvorrichtung mit dem Permanentmagneten durch Stoffschluss auf. Wenn die Verbindungsvorrichtung so ausgeführt ist, dass Fliehkräfte in einem Betrieb einer erfindungsgemäßen Außenläufermaschine die erfindungsgemäßen Permanentmagnete gegen eine Fläche der Verbindungsvorrichtung pressen, kann ein erfindungsgemäßer Permanentmagnet durch eine stoffschlüssige Verbindung der Verbindungsvorrichtung mit dem Permanentmagneten zumindest fixiert werden, insbesondere befestigt werden. Es kann im Falle des Befestigens des Permanentmagneten durch die stoffschlüssige Verbindung auf eine formschlüssige Verbindung vorteilhaft verzichtet werden. Es kann hierzu eine stoffschlüssige Verbindung an einer Fläche der Endfläche des ersten Endes eines erfindungsgemäßen Permanentmagneten und/oder einer Verbindungsfläche zwischen dem Permanentmagneten und der Verbindungsvorrichtung entlang der ersten Richtung erfolgen. Die Verbindungsfläche kann durch ihre vorteilhaft große Erstreckung die auf den Permanentmagneten wirkenden Kräfte auf die stoffschlüssige Verbindung vorteilhaft verteilen. Insbesondere ist die Verbindungsfläche im Vergleich zu den Oberflächen der magnetischen Pole, d.h. Nord- und Südpol, im Falle von Rᵢ>Rₐ vorteilhaft größer. Die Fläche der Endflächen kann vorteilhaft als Ebene ausgeführt werden.

Der Permanentmagnet kann über eine Ebene stoffschlüssig mit der Verbindungsvorrichtung verbunden werden, wobei die Fläche der Endfläche die Ebene aufweist. Eine Ebene kann mit vorteilhaft einfachen Werkzeugen mit vorteilhaft einfachen Bewegungsabläufen herstellgestellt werden.

In einer weiteren vorteilhaften Ausgestaltung eines erfindungsgemäßen Permanentmagneten ist eine Fläche und/oder Verbindungsfläche des Permanentmagneten für die Verbindung der Verbindungsvorrichtung mit dem Permanentmagneten durch Stoffschluss unbearbeitet. So kann unter Verzicht auf eine Beschichtung kostengünstig eine qualitativ hochwertige stoffschlüssige Verbindung vorteilhaft erreicht werden, die die Übertragung von großen Kräften von einem erfindungsgemäßen Permanentmagneten auf eine Verbindungsvorrichtung vorteilhaft ermöglicht, da eine stoffschlüssige Schicht zwischen der Verbindungsvorrichtung und dem Permanentmagneten an der Fläche aufgrund ihrer Rauigkeit besser haftet. Es kann z.B. hierfür nach dem Sintern des Permanentmagneten auf eine Nachbearbeitung der Fläche für die Verbindung vorteilhaft verzichtet werden.

In einer weiteren vorteilhaften Ausgestaltung eines erfindungsgemäßen Permanentmagneten weist eine Fläche und/oder Verbindungsfläche des Permanentmagneten des Permanentmagneten für die Verbindung der Verbindungsvorrichtung mit dem Permanentmagneten durch Stoffschluss eine Beschichtung auf. So kann kostengünstig eine qualitativ hochwertige stoffschlüssige Verbindung vorteilhaft erreicht werden, die eine Übertragung von großen Kräften durch Stoffschluss zwischen der Verbindungsvorrichtung und der Beschichtung und einem erfindungsgemäßen Permanentmagneten vorteilhaft erreicht. Hierbei kann die Fläche vor einem Aufbringen der Beschichtung auf dem Permanentmagneten unbearbeitet sein oder bearbeitet sein.

Vorteilhafte Ausgestaltungen erfindungsgemäßer Permanentmagnete, erfindungsgemäßer Rotoren sowie erfindungsgemäßer Außenläufermaschinen und erfindungsgemäßer Verwendungen ergeben sich vorteilhaft durch Kombination einiger oder mehrerer beschriebener Merkmale. Die oben beschriebenen Eigenschaften, Merkmale und Vorteile dieser Erfindung sowie die Art und Weise, wie diese erreicht werden, werden klarer und deutlicher verständlich im Zusammenhang mit der nun folgenden Beschreibung der Ausführungsbeispiele, die anhand der Figuren näher erläutert werden.

Es zeigen:
- FIG 1: ein erstes Ausführungsbeispiel eines erfindungsgemäßen Permanentmagneten,
- FIG 2: eine Ansicht eines zweiten Ausführungsbeispiels eines erfindungsgemäßen Permanentmagneten, bei der man auf eine Endfläche sieht,
- FIG 3: einen Längsschnitt durch ein erstes Ausführungsbeispiel eines erfindungsgemäßen Rotors,
- FIG 4: einen Querschnitt des Rotors der FIG 3 entlang der Linie IV-IV,
- FIG 5: eine Ansicht eines dritten Ausführungsbeispiels eines erfindungsgemäßen Permanentmagneten, bei der man auf eine Endfläche sieht,
- FIG 6: einen Längsschnitt des Permanentmagneten der FIG 5 entlang der Linie VI-VI,
- FIG 7: einen Längsschnitt durch ein drittes Ausführungsbeispiel eines erfindungsgemäßen Rotors, der erfindungsgemäße Permanentmagnete gemäß der FIG 5 aufweist,
- FIG 8: einen Längsschnitt durch ein viertes Ausführungsbeispiel eines erfindungsgemäßen Rotors, der erfindungsgemäße Permanentmagnete gemäß der FIG 9 aufweist,
- FIG 9: einen Querschnitt des Rotors der FIG 8 entlang der Linie IX-IX,
- FIG 10: einen Längsschnitt durch ein fünftes Ausführungsbeispiel eines erfindungsgemäßen Rotors, der erfindungsgemäße Permanentmagnete gemäß einem fünften Ausführungsbeispiel aufweist,
- FIG 11: einen Querschnitt des Rotors der FIG 10 entlang der Linie XI-XI,
- FIG 12: Ausführungsbeispiele erfindungsgemäßer Außenläufermaschinen,
- FIG 13: Ausführungsbeispiele weiterer erfindungsgemäßer Außenläufermaschinen,
- FIG 14: Ausführungsbeispiele erfindungsgemäßer Fahrzeugräder,
- FIG 15: Ausführungsbeispiele erfindungsgemäßer Windkraftanlagen,
- FIG 16: Ausführungsbeispiele weiterer erfindungsgemäßer Windkraftanlagen.

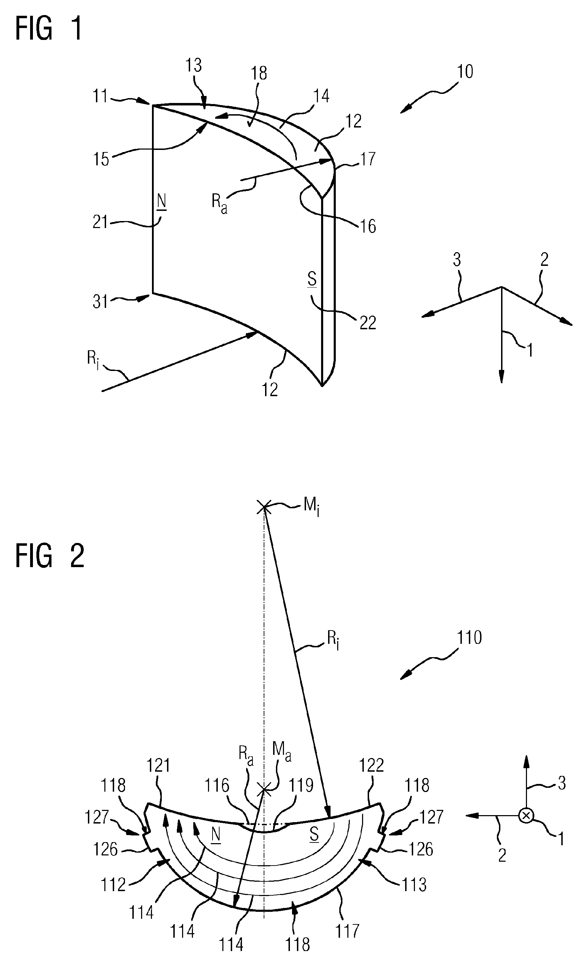

FIG 1 zeigt ein erstes Ausführungsbeispiel eines erfindungsgemäßen Permanentmagneten 10 der einen Nordpol 21 und einen Südpol 22 als magnetische Pole umfasst. Des Weiteren umfasst der Permanentmagnet 10 die Endflächen 12 an einem ersten Ende 11 und an einem zweiten Ende 31. In einem Querschnitt 13 des Permanentmagneten 10 verläuft eine Magnetisierung 14 von dem Südpol 22 zu dem Nordpol 21, wobei der Querschnitt 13 eine Hüllkurve 15 mit einem konkaven Abschnitt 16 aufweist und die magnetischen Pole bogenförmig entlang des konkaven Abschnitts 16 verlaufen. Durch die laterale Magnetisierung 14 stellt der Permanentmagnet 10 den Nord- 21 und den Südpol 22 entlang des konkaven Abschnitts 16 auf einer Seite des Permanentmagneten 10 zur Verfügung. In dem Ausführungsbeispiel gemäß der FIG 1 weist die Endfläche 12 an dem ersten Ende 11 den Querschnitt 13 des Permanentmagneten 10 auf. Der Permanentmagnet 10 erstreckt sich von seinem ersten Ende 11 in einer ersten Richtung 1 bis zu seinem zweiten Ende 31, wobei alle Querschnitte entlang der ersten Richtung 1 gleiche Hüllkurven 15 aufweisen. Die Hüllkurve 15 weist sichelförmig den konkaven Abschnitt 16 und einen konvexen Abschnitt 17 auf, wobei der Permanentmagnet 10 entlang des konvexen Abschnitts 17 bogenförmig verläuft. Mindestens eine der Endflächen 12 weist innerhalb der Hüllkurve 15 eine Fläche 18 für eine Verbindung 670 einer Verbindungsvorrichtung 672 mit dem Permanentmagneten 10 auf. Eine Höhe des Permanentmagneten 10 ist als größter Abstand zwischen dem konkaven Abschnitt 16 und dem konvexen Abschnitt 17 gemessen. Der Querschnitt 13 des Permanentmagneten 10 erstreckt sich in einer Ebene, die durch eine zweite Richtung 2 und eine dritte Richtung 3 aufgespannt sind. Die zweite Richtung 2 und die dritte Richtung 3 verlaufen senkrecht zu der ersten Richtung 1. Die Endfläche 12 des ersten Endes 11 weist die Fläche 18 zumindest für die Verbindung 670 der Verbindungsvorrichtung 672 mit dem Permanentmagneten 10 durch Stoffschluss auf. In dem Ausführungsbeispiel gemäß der FIG 1 wird die Endfläche 12 an dem ersten Ende 11 durch die Fläche 18 gebildet, die eine Ebene ist. Der Permanentmagnet 10 verläuft zwischen dem Nordpol 21 und dem Südpol 22 entlang dem konkaven Abschnitt 16. Der konkave Abschnitt 16 der Hüllkurve 15 ist ein Kreisbogen mit einem Radius Rᵢ ist und der konvexe Abschnitt 17 der Hüllkurve 15 ist ein Kreisbogen mit einem Radius Rₐ, wobei der Radius Rᵢ größer ist als der Radius Rₐ. Die Radien Rₐ, Rᵢ sind in der FIG 1 symbolisch mit Pfeilen markiert. Der Permanentmagnet 10 ist ein gesinterter Permanentmagnet. Die Flächen 18 der Endflächen 12 an dem ersten Ende 11 und an dem zweiten Ende 31 des Permanentmagneten 10 sind in diesem Ausführungsbeispiel unbearbeitet, da nach dem Sintern des Permanentmagneten 10 auf eine Nachbearbeitung der Flächen 18 für eine stoffschlüssige Verbindung mit einer Verbindungsvorrichtung einer Außenläufermaschine vorteilhaft verzichtet wurde.

FIG 2 zeigt eine Ansicht eines zweiten Ausführungsbeispiels eines erfindungsgemäßen Permanentmagneten 110, bei der man auf eine Endfläche 112 sieht. Dieses Ausführungsbeispiel weist Merkmale auf, die anhand der FIG 1 beschrieben wurden. Die Merkmale sind in FIG 2 größtenteils mit Bezugszeichen versehen, die aus den Bezugszeichen der FIG 1 durch Voranstellen einer "1" entstanden ist. So ist z. B. die Beschreibung zu dem konvexen Abschnitt 17 der FIG 1 entsprechend auf einen konvexen Abschnitt 117 der FIG 2 zu übertragen. Auf die unterschiedlichen Merkmale des Permanentmagneten 110 gemäß FIG 2 gegenüber dem Permanentmagneten 10 gemäß FIG 1 wird nachfolgend eingegangen. Der Permanentmagnet 110 gemäß der FIG 2 weist zwischen dem Nordpol 121 und dem Südpol 122 an dem konkaven Abschnitt 116 eine Ausnehmung 119 auf. Der Permanentmagnet 110 weist eine in einer ersten Richtung 1 senkrecht zu dem Querschnitt 113 verlaufende axiale Kontur 127 auf, welche eine Fläche 118 für die Verbindung der Verbindungsvorrichtung mit dem Permanentmagneten 110 durch Formschluss aufweist. Die axiale Kontur 127 ist in dem Ausführungsbeispiel der FIG 2 ein hervorstehender Steg 127. In dem Ausführungsbeispiel der FIG 2 weist der Permanentmagnet 110 zwei hervorstehende Stege 127 auf, die sich an dem konvexen Abschnitt 117 befinden. In der FIG 2 wurden die Mittelpunkte Mi, Mₐ zu den Radien Rₐ, Rᵢ eingezeichnet.

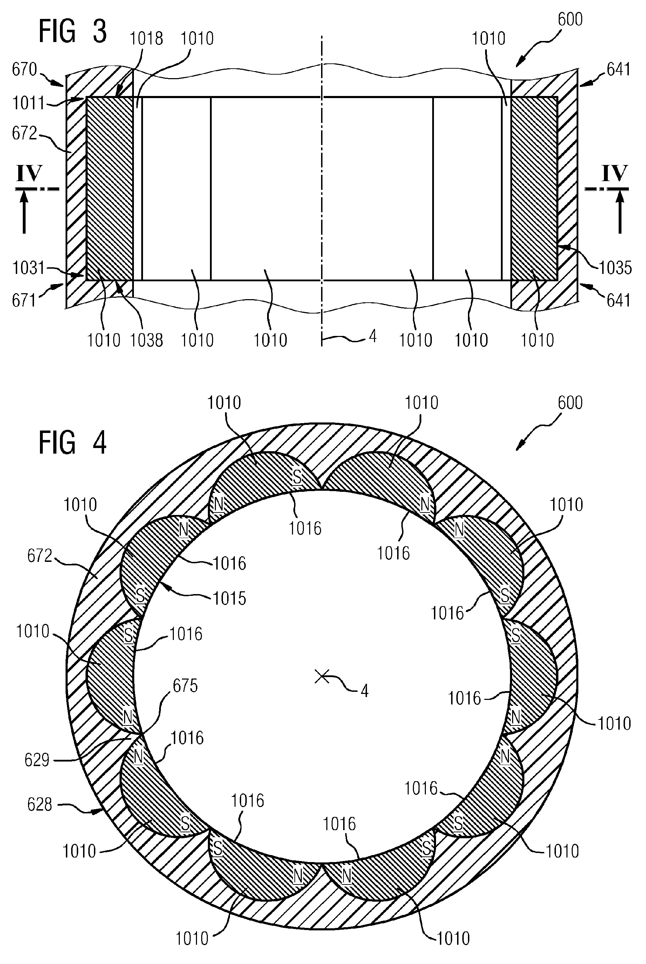

Die FIG 3 zeigt einen Längsschnitt durch ein erstes Ausführungsbeispiel eines erfindungsgemäßen Rotors 600, der mindestens einen Permanentmagneten 1010 umfasst, wobei der Permanentmagnet 1010 sich von seinem ersten Ende 1011 zu seinem zweiten Ende 1031 parallel zu einer Drehachse 4 erstreckt, wobei der Rotor 600 die Verbindungsvorrichtung 672 und die Verbindung 670 zwischen der Verbindungsvorrichtung 672 und der Fläche 1018 des Permanentmagneten 1010 aufweist. Der Permanentmagnet 1010 gemäß der FIG 3 weist die größtenteils mit Bezugszeichen versehenen Merkmale des Permanentmagneten 10 gemäß der FIG 1 auf, wobei den Bezugszeichen der FIG 1 eine "10" vorangestellt wurde. Der Permanentmagnet 1010 gemäß der FIG 3 weist an den Flächen 1018, 1038 eine Beschichtung auf. So wird eine bessere Haftung zwischen dem Permanentmagneten 1010 und dem Kunststoff erreicht, die zumindest zwischen der Beschichtung und dem Kunststoff eine Verbindung ausbilden kann, die mit einer auf atomaren Kräften beruhenden Verbindung vergleichbar ist. Die Verbindungsvorrichtung 672 weist einen Kunststoff auf, der die Verbindung mit dem Permanentmagneten 1010 durch Stoffschluss mit dessen Beschichtung ausbildet. Der Kunststoff füllt auch ein Massevolumen 629 der Verbindungsvorrichtung 672 zwischen den Permanentmagneten 1010 aus. Zur Ausbildung der Verbindungen 670, 671 der Verbindungsvorrichtung 672 mit den Flächen 1018, 1038 der Endflächen an dem ersten Ende 1011 und dem zweiten Ende 1031 des Permanentmagneten 1010 wird der Kunststoff der Verbindungsvorrichtung 672 erwärmt, so dass sich die Verbindungen 670, 671 durch Stoffschluss ausbilden. Der Rotor 600 weist die Verbindung 1018 an einem ersten axialen Ende 641 des Rotors 600 auf und der Rotor 600 weist die zweite Verbindung 671 der Verbindungsvorrichtung mit der Endfläche an dem zweiten Ende 1031 des Permanentmagneten 1010 auf. Die Verbindungen 670, 671 der Permanentmagnete 1010 mit der Verbindungsvorrichtung 672 wird mit Spritzgießen hergestellt. Hierbei werden die Permanentmagnete 1010 entsprechend positioniert und der Kunststoff für die Verbindungsvorrichtung 672 durch Spritzgießen zwischen den Permanentmagneten 1010 und dem ersten und zweitem Ende 1011, 1031 der Permanentmagneten 1010 angebracht. Hierbei bilden sich die erste Verbindung 1018 und die zweite Verbindung 1038 an den Endflächen der Permanentmagnete 1010 durch Stoffschluss aus. Die Permanentmagnete 1010 sind dabei in der Verbindungsvorrichtung 672 eingebettet. Die Endflächen an dem ersten und dem zweiten Ende 1011, 1031 weisen die Flächen 1018, 1038 für die Verbindungen 670, 671 der Verbindungsvorrichtung 672 mit dem Permanentmagneten 1010 innerhalb der Hüllkurve 1015 des Querschnitts der Permanentmagnete 1010 auf. Je nachdem, ob und wie die Beschichtung auch an den Permanentmagneten 1010 entlang der ersten Richtung 1 vorhanden ist, sind die Permanentmagnete 1010 auch an entlang der ersten Richtung 1 vorhandenen Verbindungsflächen 1035 stoffschlüssig mit der Verbindungsvorrichtung 672 verbunden.

Die FIG 4 zeigt einen Querschnitt des Rotors 600 der FIG 3 entlang der Linie IV-IV. Der Rotor 600 umfasst einen Permanentmagneten 1010, wobei der konkave Abschnitt 1016 des Permanentmagneten 1010 entlang einer Berandung 675 des Rotors 600 angeordnet ist. Der Rotor 600 weist mindestens zwei Permanentmagnete 1016 auf, die sich von ihrem ersten 1011 zu ihrem zweiten Ende 1031 parallel zu der Drehachse 4 erstrecken, wobei die konkaven Abschnitte 1016 der Permanentmagnete 1010 an der Berandung 675 des Rotors 600 auf einer zu der Drehachse 4 konzentrisch verlaufenden Kreislinie angeordnet sind. In der FIG 4 ist die Kreislinie nicht von der Berandung 675 des Rotors 600 unterscheidbar, da diese die Kreislinie zumindest aus Sicht der bildlichen Darstellung vollständig bedeckt und somit die Kreislinie in der FIG 4 identisch zu der Berandung 675 des Rotors 600 ist. Ein Nordpol eines Permanentmagneten 1010 ist entlang der Berandung 675 des Rotors 600 neben dem Nordpol des auf der Berandung 675 des Rotors 600 nächst gelegenen Permanentmagneten 1010 vorhanden. Die Hüllkurve 628 des Rotors 600 ist der in einem Querschnitt senkrecht zu der Drehachse 4 betrachtete äußere Rand des Rotors. Die Berandung 675 des Rotors 600 verläuft in diesem Querschnitt innerhalb des äußeren Rands. Der Rotor 600 ist hochpolig ausgeführt, wobei der Rotor 600 zehn magnetische Pole um die Drehachse 4 entlang der Berandung 675 des Rotors 600 angeordnet aufweist. Ein Nordpol N eines Permanentmagneten 1010 ist entlang der Berandung 675 des Rotors 600 neben dem Nordpol N des an der Berandung 675 des Rotors 600 nächstgelegenen Permanentmagneten 1010 vorhanden.

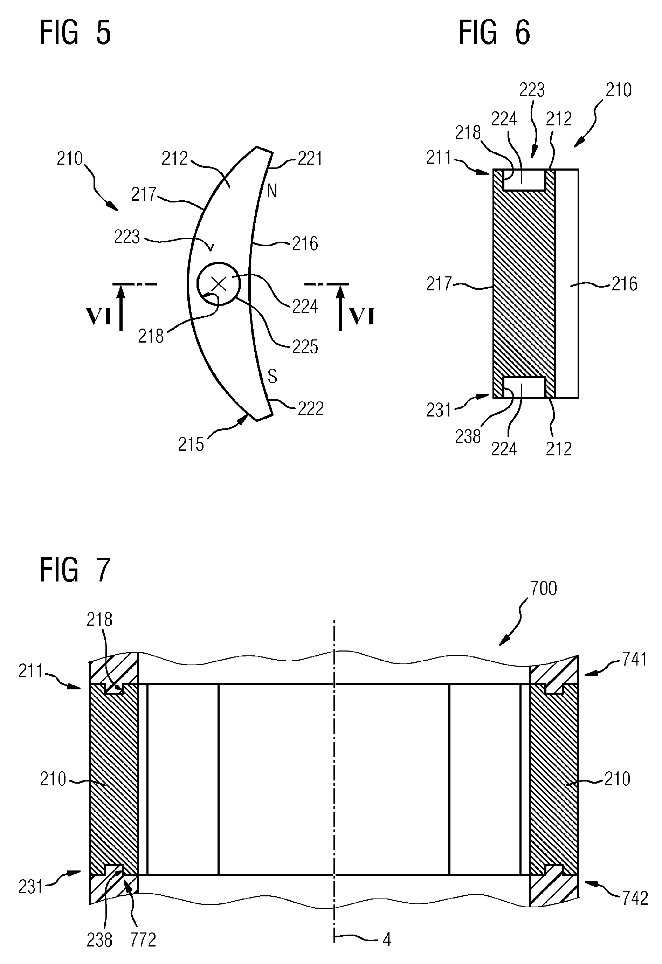

Die FIG 5 zeigt eine Ansicht eines dritten Ausführbeispiels eines erfindungsgemäßen Permanentmagneten 210, bei der man auf eine Endfläche 212 sieht. Dieses Ausführungsbeispiel weist Merkmale auf, die anhand der FIG 1 beschrieben wurden. Die Merkmale sind in FIG 5 größtenteils mit Bezugszeichen versehen, die aus den Bezugszeichen der FIG 1 durch Voranstellen einer "2" entstanden sind. Die Endfläche 212 des ersten Endes des Permanentmagneten 210 weist eine Kontur 223 auf, die die Fläche 218 für die Verbindung der Verbindungsvorrichtung 772 mit dem Permanentmagneten 210 durch Formschluss aufweist. Die Kontur 223 weist eine kreisrunde Berandung 225 auf, an der sich in einer Ausnehmung 224 die Fläche 218 erstreckt.

Die FIG 6 zeigt einen Längsschnitt des Permanentmagneten 210 der FIG 5 entlang der Linie VI-VI. Die Kontur 223 des Permanentmagneten 210 weist in der Endfläche 212 des ersten Endes 211 die Ausnehmung 224 auf. Der Permanentmagnet 202 weist analog dazu an den zweiten Ende 231 des Permanentmagneten 210 eine Kontur auf, die die Fläche 238 für die zweite Verbindung der Verbindungsvorrichtung 772 mit dem Permanentmagneten 210 durch Formschluss aufweist. Bei einem weiteren Ausführungsbeispiel eines erfindungsgemäßen Permanentmagneten, bei dem die Kontur einem gegenüber der Endfläche hervorstehenden Steg aufweist, befinden sich die Flächen für die formschlüssige Verbindung nicht in der Ausnehmung 224, sondern an dem hervorstehenden Steg.

FIG 7 zeigt einen Längsschnitt durch ein drittes Ausführungsbeispiel eines erfindungsgemäßen Rotors 700 der erfindungsgemäße Permanentmagnete 210 gemäß der FIG 5 aufweist. Dieses Ausführungsbeispiel weist auch Merkmale auf, die anhand der FIG 3 und FIG 4 beschrieben wurden. Die Merkmale sind in der FIG 7 mit Bezugszeichen versehen, die aus den Bezugszeichen der FIG 3 und FIG 4 durch Ersetzen der ersten Ziffer "6" durch eine "7" entstanden sind. Der Rotor 700 weist die Verbindung durch Formschluss an dem ersten axialen Ende 741 des Rotors 700 auf und der Rotor weist eine zweite Verbindung durch Formschluss der Verbindungsvorrichtung 772 mit der Endfläche an dem zweiten Ende 231 des Permanentmagneten 210 auf. Bei dem Rotor 700 sind die Permanentmagnete 210 ebenfalls in der Verbindungsvorrichtung 772 eingebettet, indem die Verbindungsvorrichtung 772 durch Spritzgießen mit einem Spritzgusswerkzeug hergestellt wird, wobei die Permanentmagnete 210 mit ihrem konkaven Abschnitt 216 an der Berandung des Rotors 700 auf einer zu der Drehachse 4 konzentrisch verlaufenden Kreislinie angeordnet sind.

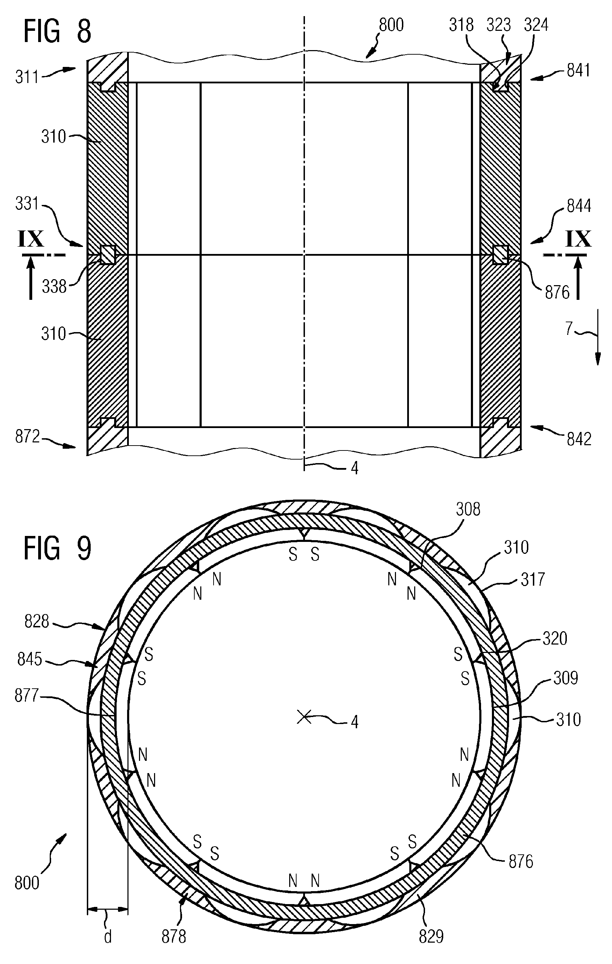

Die FIG 8 zeigt einen Längsschnitt durch ein viertes Ausführungsbeispiel eines erfindungsgemäßen Rotors 800, der erfindungsgemäße Permanentmagnete 310 gemäß der FIG 9 aufweist. Dieses Ausführungsbeispiel weist auch Merkmale auf, die anhand der FIG 7 beschrieben wurden. Die Merkmale sind in der FIG 8 mit Bezugszeichen versehen, die aus den Bezugszeichen der FIG 7 durch Ersetzen der ersten Ziffer "7" durch eine "8" entstanden sind. Der Rotor 800 weist die Verbindung an dem ersten axialen Ende 841 des Rotors 800 durch Formschluss auf und der Rotor 800 weist eine zweite Verbindung der Verbindungsvorrichtung 872 mit der Endfläche an dem zweiten Ende 331 des Permanentmagneten 310 auf. Der Rotor 800 weist die zweite Verbindung in einem Rotorabschnitt 844 zwischen dem ersten axialen Ende 841 und dem zweiten axialen Ende 842 des Rotors 800 auf und der Rotor 800 weist zwischen dem Rotorabschnitt 844 und dem zweiten axialen Ende 842 mindestens einen weiteren Permanentmagneten 310 auf. An dem Rotor 800 sind somit mehrere Permanentmagnete 310, nämlich zwei Permanentmagnete 310, in der axialen Richtung 7 hintereinander angeordnet.

Die FIG 9 zeigt einen Querschnitt des Rotors 800 der FIG 8 entlang der Linie IX-IX. Die Verbindungsvorrichtung 872 erstreckt sich in einem Querschnitt 845 des Rotors 800 an den Permanentmagneten 310 angrenzend konzentrisch zur Berandung 875 des Rotors 800 ringförmig. Die Verbindungsvorrichtung 872 weist hierfür einen Ring als Verbindungsteil 876 auf. Der Rotor 800 gemäß der FIG 9 weist erfindungsgemäße Permanentmagnete 310 gemäß einem vierten Ausführungsbeispiel eines erfindungsgemäßen Permanentmagneten 310. Das vierte Ausführungsbeispiel erfindungsgemäße Permanentmagnete weist auch Merkmale auf, die anhand der FIG 1 beschrieben wurden. Die Merkmale sind in der FIG 8 und der FIG 9 mit Bezugszeichen versehen, die aus den Bezugszeichen der FIG 1 durch Ersetzen der ersten Ziffer in "1" durch eine "3" entstanden sind. Die Kontur 323 weist eine Ausnehmung 324 in der Endfläche des ersten Endes 311 des Permanentmagneten 310 auf. Die Kontur 323 weist eine Nut auf, die durch die Ausnehmung 324 gebildet ist. Die Kontur 323 weist eine Berandung 309 auf, die sich bogenförmig von einem ersten Punkt 308 des konvexen Abschnitts 317 zu einem zweiten Punkt 320 des konvexen Abschnitts 317 erstreckt. Das Verbindungsteil 876, d. h. der Ring der Verbindungsvorrichtung 872, weist einen umlaufenden Rand 877 für eine formschlüssige Verbindung mit der Berandung 309 der Kontur 323 auf. Das Verbindungsteil 876 verläuft so in der Nut von zwei in der axialen Richtung 7 hintereinander angeordneten Permanentmagneten 310. Zwischen einem Permanentmagneten 310 und des ihm auf der Berandung 875 des Rotors 800 nächstgelegenen Permanentmagneten 310 ist das Verbindungsteil 876 mit einem Gussteil 878 verbunden, welches die Verbindungsvorrichtung 872 aufweist. Damit die zulässigen Fliehkräfte in einem Betrieb des Rotors 800 durch die Festigkeit des Rings hohe Werte ohne Schädigung des Rotors 800 vorteilhaft annehmen kann, ist das Verbindungsteil 876 aus einem Stahl, einem Karbonfaser verstärkten Kunststoff oder einem Glasfaser verstärkten Kunststoff. Der Einsatz dieser Materialien ist vorteilhaft kostengünstig in einer hohen Qualität bei dem Rotor 800 möglich, da die Fliehkräfte das Material des Rings 876 auf Zug beanspruchen. Bei einer Herstellung des Rotors 800 können die Permanentmagnete 310 mit dem Verbindungsteil 876 vorteilhaft zumindest teilweise fixiert in einem Spritzgusswerkzeug positioniert werden und das Gussteil 878 durch Spritzgießen mit einem Spritzgussmaterial hergestellt werden. Das Spritzgussmaterial weist einen Kunststoff auf. Vorteilhaft ist insbesondere bei dem Ausführungsbeispiel mit dem Verbindungsteils 876 und dem Kunststoff eine Erstreckung des Rotors 800 zwischen der Berandung 875 des Rotors 800 und seiner Hüllkurve 828 gering und entspricht der Dicke d eines Permanentmagneten 310. Der Kunststoff füllt bei diesem Ausführungsbeispiel im Idealfall nur das Massevolumen 829 der Verbindungsvorrichtung 872 zwischen den Permanentmagneten 310 aus.

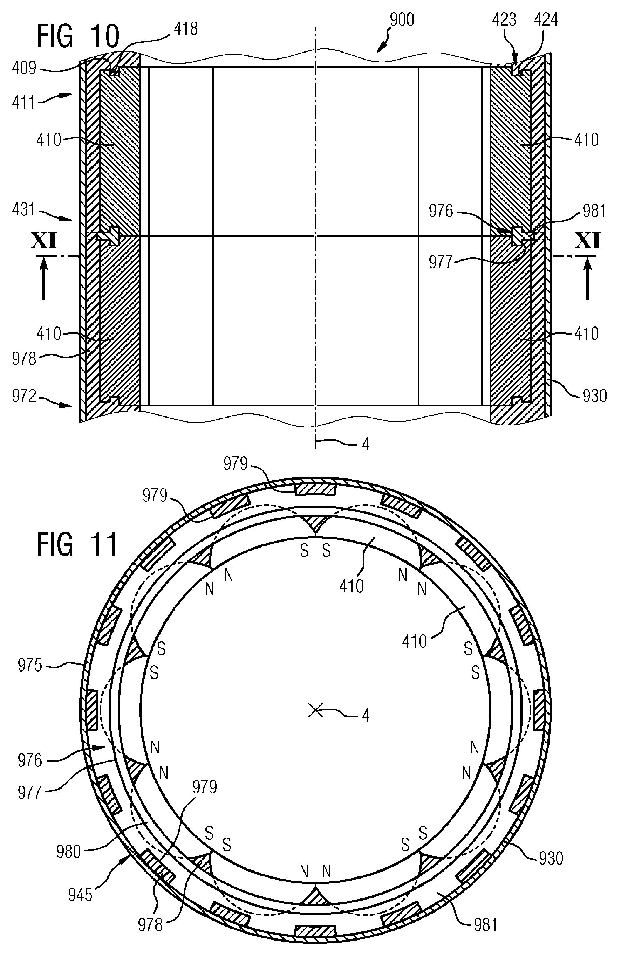

Die FIG 10 zeigt einen Längsschnitt durch ein fünftes Ausführungsbeispiel eines erfindungsgemäßen Rotors 900, der erfindungsgemäße Permanentmagnete 410 gemäß einem fünften Ausführungsbeispiel aufweist. Das fünfte Ausführungsbeispiel des Permanentmagneten 410 weist auch Merkmale auf, die anhand der FIG 1, der FIG 8 und FIG 9 beschrieben wurden. Die Merkmale sind in FIG 10 mit Bezugszeichen versehen bzw. können mit Bezugszeichen versehen werden, die aus den Bezugszeichen der FIG 1, FIG 8 und FIG 9 durch Ersetzen der ersten Ziffer "8" durch eine "9" entstanden sind bzw. durch Voranstellen einer "4". Der Permanentmagnet 410 weist wie bei dem vierten Ausführungsbeispiel eine Kontur 423 mit einer Nut auf, die eine Berandung 409 aufweist, die sich bogenförmig von dem ersten Punkt des konvexen Abschnitts zum zweiten Punkt des konvexen Abschnitts erstreckt. Zusätzlich erstreckt sich die Ausnehmung 424 mit einer im Vergleich zu der Nut geringeren Tiefe bis zum konvexen Abschnitt des Permanentmagneten 410.

Die FIG 11 zeigt einen Querschnitt des Rotors 900 der FIG 10 entlang der Linie XI-XI. Die Verbindungsvorrichtung 972 erstreckt sich in einem Querschnitt 945 des Rotors 900 an den Permanentmagneten 410 angrenzend konzentrisch zur Berandung 975 des Rotors 900 ringförmig. Hierzu weist die Verbindungsvorrichtung in dem Querschnitt 945 des Rotors 900 ein Verbindungsteil 976 auf, das einen umlaufenden Rand 977 für eine formschlüssige Verbindung mit der Berandung 409 der Kontur 423 des Permanentmagneten 410 aufweist. Das Verbindungsteil 976 erstreckt sich in radialen Richtungen senkrecht zu der Drehachse 4 bis zu einer Hülse 930, wobei der umlaufende Rand 977 einen mit einer größeren Dicke ausgeführten inneren Bereich 980 von einem mit einer geringeren Dicke ausgeführten äußeren Bereich 981 des Verbindungsteil 976 abgrenzt. In dem Ausführungsbeispiel der FIG 10 und FIG 11 erstreckt sich das Verbindungsteil 976 von seinem umlaufenden Rand 977 bis zu der Hülse 930 ringförmig. Das Verbindungsteil 976 ist entlang der Hülse 930 durch aufeinanderfolgende Ausnehmungen 979 segmentiert. So kann vorteilhaft kostengünstig in einer hohen Qualität der Rotor 900 mit einer Presspassung in der Hülse 930 befestigt werden und zusätzlich eine Zentrierung der Permanentmagnete 410 zur Drehachse 4 vorteilhaft erreicht werden. Das Gussteil 978 erstreckt sich in Räume zwischen den Permanentmagneten 410. In dem Ausführungsbeispiel wurde hierzu ein Kunststoff in die Räume eingespritzt. Die Hülse 930 ist aus Messing hergestellt.

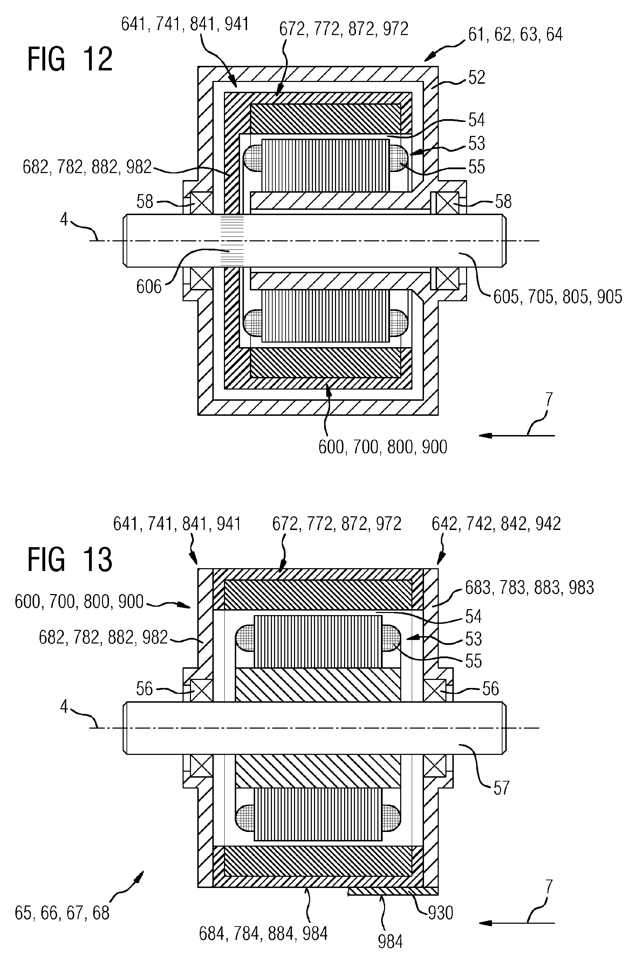

FIG 12 zeigt Ausführungsbeispiele erfindungsgemäßer Außenläufermaschinen 61, 62, 63, 64. Diese Ausführungsbeispiele weisen Merkmale auf, die anhand der FIG 1 bis 12 bereits beschrieben wurden. Diese sind in FIG 12 nicht mit Bezugszeichen versehen, könnten aber mit den Bezugszeichen wie in FIG 1 bis 11 versehen werden und mit der dazugehörigen Beschreibung beschrieben werden. Nachfolgend werden die Außenläufermaschinen beschrieben, wobei die Bezugszeichen aller Ausführungsbeispiele angegeben werden. Es kann z.B. die Beschreibung des ersten Ausführungsbeispiels mit dem Bezugszeichen 61 auf die Bezugszeichen der Merkmale der Außenläufermaschine mit Bezugszeichen 61 beschränkt werden, indem die an zweiter bis vierter Stelle genannten Bezugszeichens eines Merkmals gestrichen werden. Entsprechend erhält man die Beschreibung für ein zweites Ausführungsbeispiel mit dem Bezugszeichen 62 durch Streichen der an erster Stelle und dritter und vierter Stelle genannten Bezugszeichen eines Merkmals. Die Außenläufermaschine 61, 62, 63, 64 umfasst einen Rotor 600, 700, 800, 900 und einen Stator 53, der in einem Betrieb der Außenläufermaschine 61, 62, 63, 64 über einen Luftspalt 54 mit dem Rotor 600, 700, 800, 900 magnetisch zusammenwirkt, wobei der Rotor 600, 700, 800, 900 um die Drehachse 4 drehbar gelagert ist. Der Rotor 600, 700, 800, 900 ist an einer Welle 605, 705, 805, 905 befestigt und über diese mit einer ersten und einer zweiten Lagervorrichtung 58 um die Drehachse 4 drehbar in einem Gehäuse 52 der Außenläufermaschine 61, 62, 63, 64 gelagert. Der Stator 53 ist drehfest in dem Gehäuse 52 befestigt und weist mindestens eine Wicklung 55 auf, die sich in der axialen Richtung 7 der Drehachse 4 entlang des Luftspalts 54 erstreckt. Zur Befestigung des Rotors 600, 700, 800, 900 an der Welle 605, 705, 805, 905 weist die Verbindungsvorrichtung 672, 772, 872, 972 eine Befestigungseinrichtung 682, 782, 882, 982 auf, die, insbesondere einstückig, mit der Verbindungsvorrichtung 672, 772, 872, 972 drehfest verbunden ist und sich zwischen dem ersten axialen Ende 641, 741, 841, 941 des Rotors 600, 700, 800, 900 und der Welle 605, 705, 805, 905 erstreckt. Zur Befestigung an der Welle 605, 705, 805, 905 kann z.B. die Welle 605 eine Rändelung 606 aufweisen. Die Befestigungseinrichtung 682, 782, 882, 982 ist aufgrund der Befestigung an der Welle 605, 705, 805, 905 eine kräfteübertragende Vorrichtung. Die Verbindungsvorrichtung 672, 772, 872, 972 weist so bei den Ausführungsbeispielen der FIG 12 ein einstückig hergestelltes Teil des Rotors 600, 700, 800, 900 auf, das eine kräfteübertragende Vorrichtung umfasst und mehr als 90% des Massevolumens der Verbindungsvorrichtung umfasst. Bei erfindungsgemäßen Rotoren können erfindungsgemäße Außenläufermaschinen 61, 62, 63, 64 mit einem Gehäuse 52 gemäß der FIG 12 mit vorteilhaft geringen Abmessungen erreicht werden, da die Rotoren 600, 700, 800, 900 zwischen dem Stator 53 und dem Gehäuse 52 in radialen Richtungen senkrecht zu der axialen Richtung 7 einen vorteilhaft geringen Raum einnehmen.

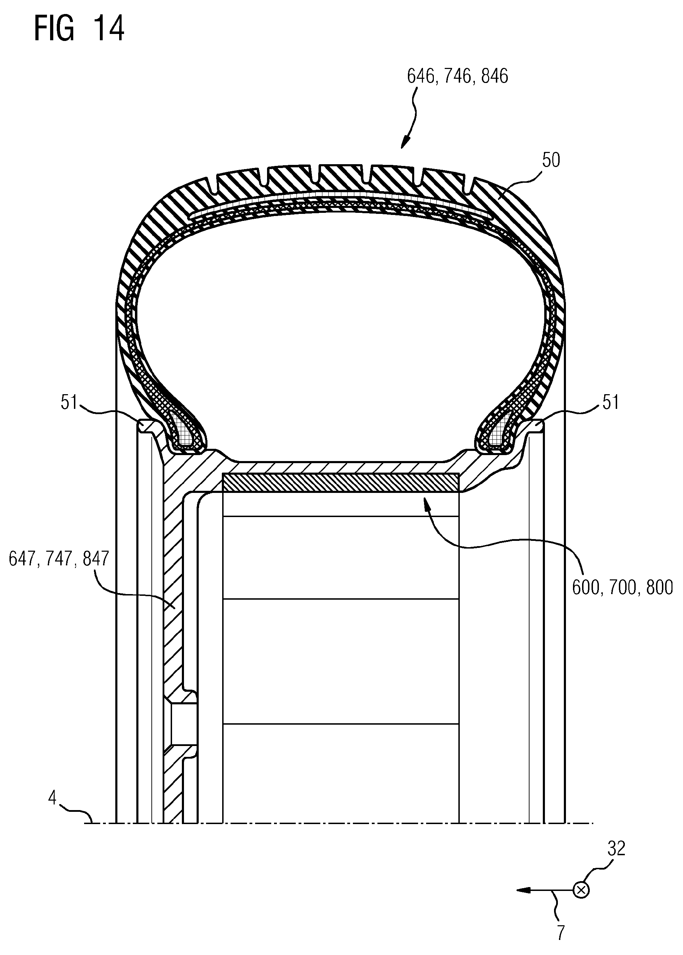

FIG 13 zeigt Ausführungsbeispiele weiterer erfindungsgemäßer Außenläufermaschinen 65, 66, 67, 68. Bei der Beschreibung der Ausführungsbeispiele und den noch später anhand der FIG 14 bis FIG 16 beschriebenen Ausführungsbeispielen wird analog zu der Verfahrensweise bei der FIG 12 vorgegangen. Die Außenläufermaschine 65, 66, 67, 68 umfasst einen Rotor 600, 700, 800, 900 und einen Stator 53, der in einem Betrieb der Außenläufermaschine 65, 66, 67, 68 über einen Luftspalt 54 mit dem Rotor 600, 700, 800, 900 magnetisch zusammenwirkt, wobei der Rotor 600, 700, 800, 900 mit Hilfe einer ersten und einer zweiten Lagervorrichtung 56 an einer Achse 57 relativ zu einem Stator 59 der Außenläufermaschine 65, 66, 67, 68 um die Drehachse 4 drehbar gelagert ist. Der Stator 59 ist drehfest an der Achse 57 befestigt und weist mindestens eine Wicklung 55 auf, die sich in der axialen Richtung 7 der Drehachse 4 entlang des Luftspalts 54 erstreckt. Zur drehbaren Lagerung des Rotors 600, 700, 800, 900 an der Achse 57 weist die Verbindungsvorrichtung 672, 772, 872, 972 eine Befestigungseinrichtung 682, 782, 882, 982 auf, die, insbesondere einstückig, mit der Verbindungsvorrichtung verbunden ist und sich zwischen dem ersten axialen Ende 641, 741, 841, 941 des Rotors 600, 700, 800, 900 und der ersten Lagervorrichtung 56 erstreckt. Anders wie bei den Ausführungsbeispielen der FIG 12 weist die Verbindungsvorrichtung 672, 772, 872, 972 gemäß der FIG 13 zusätzlich eine zweite Befestigungseinrichtung 683, 783, 883, 983 auf, die, insbesondere einstückig, mit der Verbindungsvorrichtung 672, 772, 872, 972 verbunden ist und sich zwischen dem zweiten axialen Ende 642, 742, 842, 942 des Rotors 600, 700, 800, 900 und der ersten Lagervorrichtung 56 erstreckt. Eine sich entlang der Drehachse 4 erstreckende Außenfläche 684, 784, 884, 984 des Rotors kann hier als kräfteübertragende Vorrichtung zu einem mechanischen Verbraucher oder als mechanischer Verbraucher dienen. Das fünfte Ausführungsbeispiel des Rotors 900 weist z.B. eine Hülse 930 aus Messing auf, so dass die Außenfläche 984 ausreichend massiv ausgeführt ist, um diese Außenläufermaschine 68 als robusten Rollenantrieb zu verwenden, bei dem durch eine reibschlüssige Verbindung zwischen einem Transportgut und der Außenfläche 984 das Transportgut im Betreib der Außenläufermaschine 68 bewegt wird.

FIG 14 zeigt Ausführungsbeispiele erfindungsgemäßer Fahrzeugräder 646, 746, 846. Das Fahrzeugrad 646, 746, 846 weist eine Felge 647, 747, 847 auf, die einen Rotor 600, 700, 800 umfasst. In der FIG 14 ist zur Vereinfachung nur der Teil der Fahrzeugräder 646, 746, 846 oberhalb der Drehachse 4 gezeichnet. Die Felge 647, 747, 847 weist einen Führungsrand 51 auf, der zum Führen des Fahrzeugrades 646, 746, 846 entlang einer Wegstrecke beim Fahren eines Fahrzeugs mit dem Fahrzeugrad 646, 746, 846 dient. Bei Fahrzeugrädern 647, 747, 847, die einen Reifen 50 aufweisen, ist in der Regel ein weiterer Führungsrand 51 an der Felge 647, 747, 847 vorgesehen, damit der Reifen 50 im notwendigen Maße der Bewegung der Felge 647, 747, 847 in der Fahrrichtung 32 folgt, d.h. die Abweichungen der Bewegung in der axialen Richtung 7 zwischen Felge 647, 747, 847 und Reifen 50 zumindest so gering ist, dass der Reifen 50 sich während des Fahrens nicht in der axialen Richtung 7 von der Felge 647, 747, 847 löst, wobei unter axialer Richtung natürlich auch die "negative" axiale Richtung, d.h. entgegen der in der FIG 14 eingezeichneten Pfeilspitze, gemeint ist. Der Reifen 50 ist so bei den Ausführungsbeispielen der FIG 14 zwischen den beiden Führungsrändern 51 auf der Felge 647, 747, 847 montiert. Die Felge ist als Leichtbaukonstruktion mit dem Leichtbaumaterial Aluminium bzw. einer Aluminiumlegierungen hergestellt. In dem Ausführungsbeispiel wird hierzu AlSi7Mg0,3 verwendet, dass eine Massedichte von ca. 2,7 kg/dm³ aufweist. Somit kommen bei den Ausführungsbeispielen des Fahrzeugrades 646, 746, 846 für Kraftwagen Rotoren 600, 700, 800 gemäß der FIG 3 bis FIG 9 zum Einsatz, wobei anstelle des Kunststoffes ein Leichtmetall oder Leichtmetalllegierung mit einer Massedichte kleiner als 4,6 kg/dm³ für die Verbindungsvorrichtung 672, 772, 872 verwendet wird und die Felge als Verbindungvorrichtung 672, 772, 872 ausgeführt ist, an der einstückig die Führungsränder 51 geformt sind.

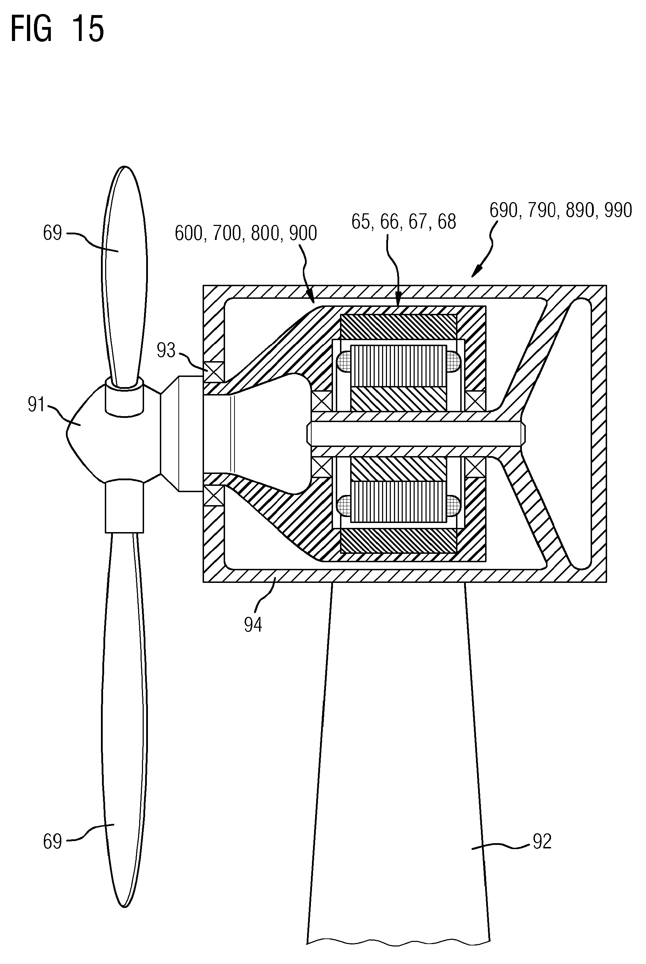

FIG 15 zeigt Ausführungsbeispiele erfindungsgemäßer Windkraftanlagen 690, 790, 890, 990. Die Windkraftanlage 690, 790, 890, 990 umfasst einen Rotor 600, 700, 800, 900 und Flügel 69, die mit dem Rotor 600, 700, 800, 900 verbunden sind. Die Windkraftanlage 690, 790, 890, 990 umfasst eine Außenläufermaschine 65, 66, 67, 68, die an einem Ende eines über 10 m, häufig über 100 m, hohen Mastes 92 der Windkraftanlage 690, 790, 890, 990 montiert ist. Der Rotor 600, 700, 800, 900 ist eine Leichtbaukonstruktion, die in dem Ausführungsbeispiel der FIG 15 eine Nabe 91 umfasst, mit der die Flügel 69 verbunden sind. Es kommen bei den Ausführungsbeispielen Windkraftanlage 690, 790, 890, 990 Rotoren 600, 700, 800,900 gemäß der FIG 3 bis FIG 9 in einer hochpoligen Ausführung mit mindesten 100 magnetischen Polen und einer Leichtbaukonstruktion zum Einsatz, wobei die Befestigungseinrichtung 682, 782, 882, 982 durch eine weitere Lagervorrichtung 93 an einer Tragvorrichtung 94 drehbar gelagert mit der Nabe 91 verbunden ist. Die Tragvorrichtung 94 ist an dem Ende des Mastes 92 befestigt. Bei den Rotoren 600, 700, 800,900 wird in den Ausführungsbeispielen der FIG 15 anstelle des Kunststoffes ein Faserverbundwerkstoff für die Verbindungsvorrichtung 672, 772, 872, 972 verwendet. Der Faserverbundwerkstoff umfasst einen kohlefaserverstärkten Kunststoff. So sind an Verbindungsstellen zwischen Verbindungsvorrichtung 672, 772, 872, 972 und Nabe 91 und auch Nabe 91 und Flügel 69 durch den Faserverbundwerkstoff vergleichbare Materialeigenschaften bei der Verbindungsvorrichtung 672, 772, 872, 972, der Nabe 91 und den Flügeln 69 vorhanden. Die Verbindungsvorrichtung 672, 772, 872, 972 weist mehrere Segmente um die Drehachse 4 angeordnet auf. So kann der Rotor 600, 700, 800,900, insbesondere mit einem Durchmesser von mindestens 1 m, bei einer Montage des Rotors an der Windkraftanlage 690, 790, 890, 990 aus Segmenten zusammengesetzt werden oder einzelne Segmente ausgetauscht werden.

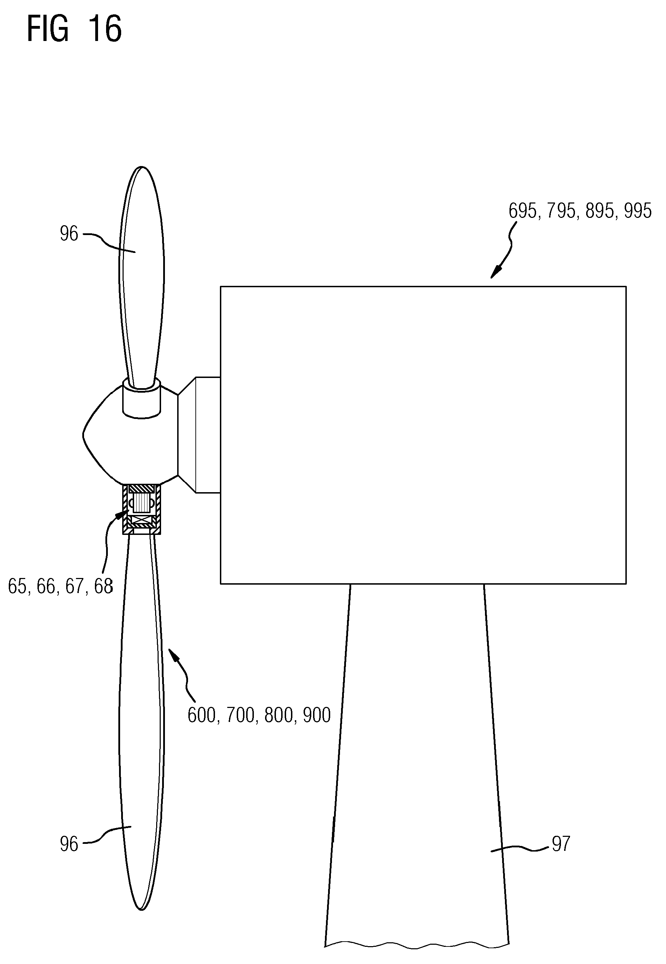

FIG 16 zeigt Ausführungsbeispiele weiterer erfindungsgemäßer Windkraftanlagen 695, 795, 895, 995. Die Windkraftanlage 695, 795, 895, 995 umfasst den Rotor 600, 700, 800, 900 und Flügel 96, die mit dem Rotor 600, 700, 800, 900 verbunden sind. Die Windkraftanlage 695, 795, 895, 995 umfasst eine Außenläufermaschine 65, 66, 67, 68, die an einem Ende eines über 10 m, häufig über 100 m, hohen Mastes 97 der Windkraftanlage 695, 795, 895, 995 montiert ist. Der Rotor 600, 700, 800, 900 ist eine Leichtbaukonstruktion, die in dem Ausführungsbeispiel der FIG 15 die Flügel 96 umfasst. Die Flügel 96 sind einstückig mit dem Rotor 600, 700, 800, 900 verbunden. Die einstückige Verbindung ist durch die Herstellung der Flügel 96 und der Verbindungsvorrichtung 672, 772, 872, 972 als eine Einheit überwiegend aus Faserverbundwerkstoffen erfolgt.

Obwohl die Erfindung im Detail durch die bevorzugten Ausführungsbeispiele näher beschrieben wurde, ist sie nicht auf die offenbarten Beispiele beschränkt. Andere Variationen können vom Fachmann hieraus abgeleitet werden, ohne den Schutzumfang der Erfindung zu verlassen.

## Patentansprüche

1. Permanentmagnet (10, 110, 210, 310, 410, 1010) zur Verbindung mit einer Verbindungsvorrichtung (672, 772, 872, 972) einer Außenläufermaschine (61, 62, 63, 64, 65, 66, 67, 68), umfassend
- einen Nord- (21, 121) und einen Südpol (22, 122) als magnetische Pole,
- wobei in einem Querschnitt (13) des Permanentmagneten (10, 110, 210, 310, 410, 1010) eine Magnetisierung (14, 114) von dem Südpol (22, 122) zu dem Nordpol (21, 121) verläuft,
- wobei der Querschnitt (13) eine Hüllkurve (15, 1015, 215) mit einem konkaven Abschnitt (16, 116, 1016, 216) aufweist,
- wobei die Hüllkurve (15, 1015, 215) sichelförmig den konkaven Abschnitt (16, 116, 1016, 216) und einen konvexen Abschnitt (17, 117, 217, 317) aufweist,
- wobei der Permanentmagnet (10, 110, 210, 310, 410, 1010) entlang des konvexen Abschnitts (17, 117, 217, 317) bogenförmig verläuft,
- wobei die magnetischen Pole bogenförmig entlang des konkaven Abschnitts (16, 116, 1016, 216) verlaufen.

2. Permanentmagnet (10, 110, 1010) nach Anspruch 1, wobei der konkave Abschnitt (16, 116, 1016, 216) der Hüllkurve (15, 1015, 215) ein Kreisbogen mit einem Radius Rᵢ ist und der konvexe Abschnitt (17, 117, 217, 317) der Hüllkurve (15, 1015, 215) ein Kreisbogen mit einem Radius Rₐ ist, wobei der Radius Rᵢ größer ist als der Radius Rₐ.

3. Permanentmagnet (110) nach Anspruch 1 oder 2, wobei der Permanentmagnet eine in einer ersten Richtung (1) senkrecht zu dem Querschnitt (113) verlaufende axiale Kontur (127), insbesondere eine Ausnehmung oder einen hervorstehenden Steg (126), aufweist, welche eine Fläche (118) für die Verbindung der Verbindungsvorrichtung mit dem Permanentmagneten (110) durch Formschluss aufweist.

4. Permanentmagnet (210, 310, 410) nach einem der vorhergehenden Ansprüche, wobei der Permanentmagnet (10, 110, 210, 310, 410, 1010) eine Endfläche (12, 112, 212) an einem ersten Ende (11, 1011, 211, 311, 411) des Permanentmagneten (10, 110, 210, 310, 410, 1010) aufweist, wobei die Endfläche des ersten Endes (211, 311, 411) eine Kontur (223, 323, 423), insbesondere eine Ausnehmung oder einen gegenüber der Endfläche hervorstehenden Steg, aufweist, welche innerhalb der Hüllkurve (15, 1015, 215) eine Fläche (218, 318, 418) für die Verbindung der Verbindungsvorrichtung (772, 872, 972) mit dem Permanentmagneten (210, 310, 410) durch Formschluss aufweist.

5. Permanentmagnet (310, 410) nach Anspruch 4, wobei die Kontur (323, 324) eine Berandung (309, 409) aufweist, die sich von einem ersten Punkt (308) des konvexen Abschnitts (317) zu einem zweiten Punkt (320) des konvexen Abschnitts (317) bogenförmig erstreckt.

6. Permanentmagnet (110) nach einem der vorhergehenden Ansprüche, wobei der Permanentmagnet (110) zwischen dem Nord-(121) und dem Südpol (122) an dem konkaven Abschnitt (116) eine Ausnehmung (119) aufweist.

7. Permanentmagnet (10, 1010, 210, 310, 410) nach einem der Ansprüche 1 bis 5, wobei der Permanentmagnet (10, 1010, 210, 310, 410) zwischen dem Nordpol (21) und dem Südpol (22) entlang dem konkaven Abschnitt (16) verläuft.

8. Permanentmagnet (10, 110, 210, 310, 410, 1010) nach einem der vorhergehenden Ansprüche, wobei der Permanentmagnet (10, 110, 210, 310, 410, 1010) ein gesinterter Permanentmagnet ist.

9. Rotor (600, 700, 800, 900) für eine Außenläufermaschine (61, 62, 63, 64, 65, 66, 67, 68) umfassend mindestens einen Permanentmagneten (10, 110, 210, 310, 410, 1010) nach einem der vorhergehenden Ansprüche, wobei der Rotor (600, 700, 800, 900) die Verbindungsvorrichtung (672, 772, 872, 972) für die Verbindung mit dem Permanentmagneten (10, 110, 210, 310, 410, 1010) aufweist, wobei der Permanentmagnet (10, 110, 210, 310, 410, 1010) sich von seinem ersten Ende (11, 1011, 211, 311, 411) zu seinem zweiten Ende (31, 1031, 231, 338, 438) parallel zu einer Drehachse (4) erstreckt, wobei der konkave Abschnitt (16, 116, 1016, 216) des Permanentmagneten (10, 110, 210, 310, 410, 1010) entlang einer Berandung (675, 875, 975) des Rotors (600, 700, 800, 900) angeordnet ist.

10. Rotor (600, 700, 800,900) nach Anspruch 9, wobei ein aus einem Werkstoff einstückig hergestelltes Teil des Rotors (600, 700, 800, 900) eine kräfteübertragende Vorrichtung umfasst und das Teil mehr als 90% des Massevolumens der Verbindungsvorrichtung (672, 772, 872, 972) umfasst.

11. Rotor (800, 900) nach Anspruch 9 oder 10, wobei sich die Verbindungsvorrichtung (872, 972) in einem Querschnitt (845, 945) des Rotors (800, 900) an den Permanentmagneten (310, 410) angrenzend konzentrisch zur Berandung (875, 975) des Rotors (800, 900) ringförmig erstreckt.

12. Rotor (600) nach einem der Ansprüche 9 bis 11, wobei der Permanentmagnet (10, 110, 1010) zumindest stoffschlüssig mit der Verbindungsvorrichtung (672) verbunden ist.

13. Außenläufermaschine (61, 62, 63, 64, 65, 66, 67, 68) umfassend einen Rotor (600, 700, 800, 900) nach einem der Ansprüche 9 bis 12, und
- einen Stator (53), der in einem Betrieb der Außenläufermaschine (61, 62, 63, 64) über einen Luftspalt (54) mit dem Rotor (600, 700, 800, 900) magnetisch zusammenwirkt,
- wobei der Rotor (600, 700, 800, 900) um die Drehachse (4) drehbar gelagert ist.

14. Fahrzeugrad (646, 746, 846) umfassend einen Rotor (600, 700, 800,900) nach einem der Ansprüche 9 bis 12, wobei das Fahrzeugrad (646, 746, 846) eine Felge (647, 747, 847) aufweist, die den Rotor (600, 700, 800,900) umfasst.

15. Windkraftanlage(690, 695, 790, 795, 890, 895, 990, 995) umfassend einen Rotor (600, 700, 800, 900) nach einem der Ansprüche 9 bis 12, wobei die Windkraftanlage (690, 695, 790, 795, 890, 895, 990, 995) Flügel (69,96) umfasst, die mit dem Rotor (600, 700, 800, 900) verbunden sind.
